**Europäisches Patentamt**

**European Patent Office**

**Office européen des brevets**

(19)

(11) Veröffentlichungsnummer: **0 059 216**
**B1**

(12) **EUROPÄISCHE PATENTSCHRIFT**

(45) Veröffentlichungstag der Patentschrift:
**16.01.85**

(51) Int. Cl.⁴: **B 08 B 3/02**, B 60 S 3/04

(21) Anmeldenummer: **81902655.0**

(22) Anmeldetag: **04.09.81**

(86) Internationale Anmeldenummer:
**PCT/EP 81/00144**

(87) Internationale Veröffentlichungsnummer:
**WO 82/00783 (18.03.82 Gazette 82/8)**

(54) **Vorrichtung zur Reinigung von Gegenständen mittels einer Sprühpistole.**

**Verbunden mit 81106969.9/047515 (europäische Anmeldenummer/Veröffentlichungsnummer) durch Entscheidung vom 30.08.84.**

(30) Priorität: 06.09.80 DE 3033622
15.09.80 DE 3034769

(43) Veröffentlichungstag der Anmeldung:
**08.09.82 Patentblatt 82/36**

(45) Bekanntmachung des Hinweises auf die Patenterteilung:
**16.01.85 Patentblatt 85/3**

(84) Benannte Vertragsstaaten:
**AT BE CH FR GB LI NL SE**

(56) Entgegenhaltungen:
**FR - A - 1 586 067**
**US - A - 2 635 010**
**US - A - 3 470 023**
**US - A - 3 556 402**

(73) Patentinhaber: **Oberdorfer, Guido,
Guido-Oberdorfer-Strasse 11-16, D-7919 Bellenberg
(DE)**

(72) Erfinder: **Oberdorfer, Guido,
Guido-Oberdorfer-Strasse 11-16, D-7919 Bellenberg
(DE)**

(74) Vertreter: **Riebling, Günter Dr.-Ing., Dipl.-Ing., Ing.grad. et al, Rennerle 10 Postfach 3160, D-8990 Lindau (DE)**

## Beschreibung

Die Erfindung betrifft eine Vorrichtung zur Reinigung von Gegenständen mittels einer Sprühpistole, mit der ein gegebenenfalls erwärmter Wasser-Hochdruckstrahl auf den zu reinigenden Gegenstand gesprüht wird und dem Hochdruckstrahl reinigende und pflegende Chemikalien beimischbar sind, wobei der aus einem Wasserzulauf entnommene Niederdruck-Wasserstrahl in einen geheizten Boiler eingeleitet wird und die Saugleitung einer Hochdruckpumpe am Auslauf des Boilers angeschlossen ist, wobei die Hochdruckleitung der Hochdruckpistole über eine Anschlussleitung mit der Sprühpistole verbunden ist.

Eine eingangs genannte Vorrichtung ist beispielsweise mit der US-A-3 556 402 bekannt geworden. Der Niederdruckstrahl wird hierbei nicht aus einer eigenen Wasserquelle gespeist, sondern er wird von einer Hochdruckquelle abgeleitet. Hiermit ist der Nachteil verbunden, dass der Niederdruckstrahl stromabwärts hinter der Hochdruckpumpe dem Gerät entnommen wird und dass daher nur eine relativ geringe Wassermenge zur Verfügung steht.

Die Erfindung hat sich daher die Aufgabe gestellt, ausgehend von einer Anordnung nach der US-PS eine solche so weiterzubilden, dass bei der Niederdruckreinigung ein Wasserstrahl mit grosser Wassermenge zur Verfügung steht.

Zur Lösung der gestellten Aufgabe ist die Erfindung dadurch gekennzeichnet, dass vom Wasserzulauf abzweigend eine Niederdruckleitung vorgesehen ist, die stromabwärts eines in der Hochdruckleitung angeordneten Rückschlagventils in die Anschlussleitung der Sprühpistole mündet.

Das vorliegende Arbeitsverfahren schlägt also eine Kombination aus einem Niederdruck- mit einem Hochdruckverfahren vor, wobei dem Hochdruckreinigungsverfahren ein Niederdruckreinigungsverfahren vorgeschaltet ist. Dies hat den wesentlichen Vorteil, dass die Chemikalien mittels Niederdruck aufgebracht werden, was einen besonders schonenden und sparsamen Chemikalienauftrag auf den zu reinigenden Gegenstand gewährleistet. Die Niederdruckreinigung wird nach dem Auftrag der Chamikalien in einem zweiten Arbeitsgang abgeschaltet, so dass die Chemikalien eine längere Zeit auf den zu reinigenden Gegenstand einwirken können. Danach wird dann auf die Hochdruckreinigung umgeschaltet und im dritten Arbeitsgang die Chemikalien mit dem Hochdruckstrahl abgewaschen. Dies gewährleistet eine besonders vollständige und gründliche Entfernung der Chemikalien, wobei gleichzeitig mit dem Hochdruckstrahl noch ein weiterer Reinigungseffekt (schmutzabhebende Wirkung des Hochdruckstrahls) gewährleistet ist.

Die von dem Hochdruckstrahl herrührenden Wasserrückstände können von dem zu reinigenden Gegenstand mittels Presslust abgeblasen werden. Diese Entfernung von Wasserrückständen ist besonders bei der Motorreinigung wichtig, aber auch bei der Reinigung von Zündverteilern, Zündkerzen und anderen wasserempfindlichen Teilen.

Weiterer Vorteil dieser Massnahme ist, dass mit dem Pressluftrahl noch weitere Chemikalien aufgebracht werden können, wie z.B. Sprühwachs, Felgenreiniger, Insektenentferner usw. Es handelt sich hierbei um Chemikalien, die nur in Verbindung mit Luft, nicht aber in Verbindung mit Wasser ihre Reinigungswirkung entfalten. In der Regel sind dies nichtwasserdispergierbare Chemikalien.

Das gesamte System, bestehend aus einer Kombination eines Niederdruckreinigungsverfahrens mit einem Hochdruckreinigungsverfahren und gegebenenfalls einem nachgeschalteten Luftreinigungsverfahren, hat den Vorteil, dass mit wesentlich niedrigeren Temperaturen (vorzugsweise einer Temperatur von etwa 45°) gearbeitet werden kann und dass hiermit wesentlich geringere Wassermengen bei geringeren Drücken verwendet werden. Das Gerät ist also hinsichtlich seines Energie- und Wasserverbrauchs sparsam und entfaltet gleichzeitig eine optimale Reinigungswirkung, wie sie bisher noch nicht bekannt war. Des weiteren werden an die Bedienungsperson keine so hohen Anforderungen an die exakte Führung des Sprühstrahls gestellt, wie es bei der Hochdruckreinigung vorher der Fall war, da der Schmutz durch die vorhergehende Niederdruckreinigung bereits gelöst wurde.

Das erfindungsgemäss beschriebene Gerät eignet sich auch in idealer Weise für den Selbstbedienungsbetrieb (Einbau eines Münzautomaten), so dass es für die Selbstbedienung an Tankstellen eingesetzt werden kann und überhaupt von ungelernten Bedienungspersonen durchgeführt werden kann.

Damit aggressive Chemikalien verarbeitet werden können, ist es statt der Verwendung von Pumpen vorgesehen, sogenannte Injektoren zu verwenden. Diese Injektoren wirken wie Wasserstrahlpumpen, wobei an die Ansaugleitung die Chemikalienleitung angeschlossen ist. Damit mehrere Chemikalien ausgewählt werden können, sind mehrere Chemikalienbehälter vorgesehen, wobei in jeden Behälter eine Chemikalienleitung mündet. Im Leitungsverlauf ist jeweils ein Magnetventil eingebaut, bei dessen Ansteuerung die entsprechende Leitung geöffnet wird und die Chemikalie aus dem Behälter abgesaugt wird. Die verwendeten Injektoren können also auch aggressive Chemikalien ansaugen und dem Wasser- oder Pressluftstrahl beimischen, was mit entsprechend wirkenden Pumpen nicht möglich wäre. Die Magnetventile in den Chemikalienleitungen können direkt über am Handgriff der Pistole angeordnete Wahlschalter angesteuert werden. Es ist sowohl eine drahtlose als auch eine drahtgebundene Ansteuerung möglich. Ebenso können die Wahlschalter an der Frontseite des Geräts angeordnet werden.

Damit eine teure und zeitaufwendige Spülung der Leitungen beim Wechsel von einer Chemikalie auf die andere entfällt, ist es vorgesehen, dass die Chemikalienleitungen unmittelbar in der Pistole in eine gemeinsame Ansaugleitung münden, so dass beim Wechsel von einer Chemikalie auf die andere schlagartig statt der einen Leitung die andere eingeschaltet wird und ein teures Spülen oder Entleeren der vorher benutzten Chemikalienleitung entfällt.

Weitere Merkmale des Anmeldungsgegenstands sind Gegenstand der übrigen Unteransprüche.

Der Erfindungsgegenstand der vorliegenden Erfindung ergibt sich nicht nur aus dem Gegenstand der der einzelnen Patentansprüche, sondern auch aus der Kombination der einzelnen Patentansprüche untereinander.

Im folgenden wird die Erfindung anhand von lediglich einen Ausführungsweg darstellenden Zeichnungen näher erläutert.

Hierbei gehen aus den Zeichnungen und ihrer Beschreibung weitere erfindungswesentliche Merkmale und Vorteile der Erfindung hervor.

Es zeigen:

Fig. 1 schematisiert den Leitungsverlauf einer Mehrzweck-Reinigungsmaschine mit Hochdruck-, Niederdruck- und Luftteil;

Fig. 2 schematisiert den Leitungsverlauf für eine Pressluftpistole mit Zumischung von Chemikalien in den Luftstrom.

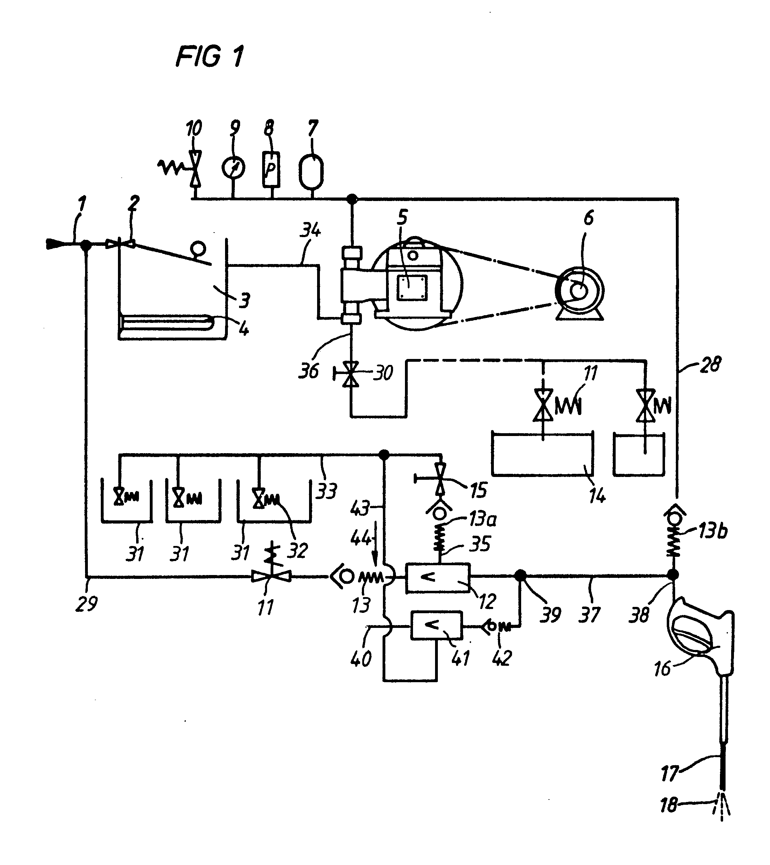

Gemäss Fig. 1 ist an einem Wasserzulauf 1 ein Schwimmerventil 2 angeordnet, das den Wasserstand in einem mittels Heizstäben 4 elektrisch beheizten Boiler 3 konstant hält. Die Wassertemperatur wird mittels Thermostaten vorzugsweise auf eine Temperatur von 45°C eingestellt und geregelt. Stromaufwärts des Schwimmerventils 2 ist der Abzweig mittels der Niederdruckleitung 29 für den Niederdruckteil. Über die Niederdruckleitung 29 wird das Wasser in den Niederdruckteil eingespeist, während über die Leitung 34 das Wasser der Hochdruckpumpe 5 zugeführt wird.

Die Niederdruckleitung 29 mündet in ein Magnetventil 11, das von einem Betätigungsschalter zur Einschaltung des Niederdruckteils angesteuert wird, wobei sich dieser Betätigungsschalter entweder am Gehäuse des Geräts befindet oder unmittelbar am Handgriff der Sprühpistole 16.

Von dem Magnetventil 11 führt die Niederdruckleitung über ein Rückschlagventil 13 zu einem Injektor 12. Das Rückschlagventil 14 hat die Aufgabe, das Hochdruckmedium, das über die Hochdruckleitung 28 in die Sprühpistole 16 geführt wird, von dem Niederdruckteil fernzuhalten. Hierdurch soll eine Einspeisung des Hochdruckmediums in den Wasserzulauf 1 verhindert werden.

Der Injektor 12 ist gemäss der obenstehenden Beschreibung im Prinzip wie eine Wasserstrahlpumpe aufgebaut. In der Leitung 35 wird Unterdruck erzeugt und über ein Rückschlagventil 13a und ein Dosierventil 15 werden verschiedene Chemikalien aus der Saugleitung 33 abgesaugt. An der Saugleitung 33 setzen mehrere Chemikalienleitungen an, von denen jede mit einem Magnetventil 32 abgeschlossen ist. Bei Öffnen des jeweilig ausgewählten Magnetventils 32 wird aus dem entsprechenden Chemikalienbehälter 31 die gewünschte Chemikalie abgesaugt. Der Wahlschalter zur Ansteuerung der Magnetventile kann gemäss der vorstehenden Beschreibung im Handgriff der Sprühpistole 16 oder am Gerät angeordnet sein. In dem Injektor 12 wird die Chemikalie dem Niederdruck-Wasserstrahl beigemischt und über die Leitung 37 und die Anschlussleitung 38 der Sprühpistole 16 zugeführt. Im Handgriff der Sprühpistole 16 ist ein Abschaltventil vorhanden, bei dessen Öffnung ein Sprühstrahl über das Sprührohr 17 und die Düse 18 abgegeben wird.

Im Gerät ist gleichzeitig noch ein Hochdruckteil vorhanden. Der Hochdruckteil besteht aus einer Hochdruckpumpe 5, die über die Leitung 34 erwärmtes Wasser aus dem Boiler 3 absaugt. An der Saugseite der Hochdruckpumpe 5 ist gleichzeitig noch die Leitung 36 angeschlossen, in deren Verlauf ein Dosierventil 30 angeordnet ist. Über diese Leitung 36 können ebenfalls Chemikalien aus Zusatzmittelbehältern 14 abgesaugt werden, wobei ebenfalls fernbetätigbare Magnetventile 11 in den entsprechenden Chemikalienleitungen angeordnet sind.

Statt der Verwendung zweier verschiedener Chemikalienbehälter 14 bzw. 31 kann es auch vorgesehen sein, dass mittels eines Umschaltventils die Saugleitung 36 an der Saugleitung 33 des Niederdruckteils ansetzt und dort die Chemikalien aus den Chemikalienbehältern 31 ansaugt.

Die Zumischung von Chemikalien im Hochdruckteil kann jedoch auch entfallen.

Der Chemikalienstrom an der Leitung 36 wird mit dem Wasserstrom an der Leitung 34 vermischt und in der Hochdruckpumpe 5 hoch verdichtet. Der hoch verdichtete Wasserstrahl wird über die Hochdruckleitung 28 und das Rückschlagventil 13b der Sprühpistole 16 zugeführt. Das Rückschlagventil 13b verhindert, dass Niederdruckmedium über die Leitung 37 in die Hochdruckleitung 28 eingespeist wird.

An der Hochdruckseite ist noch ein Sicherheitsventil 10, ein Manometer 9 und ein Hydrospeicher 7 angeordnet. Die Hochdruckpumpe 5 wird von einem Elektromotor 6 angetrieben.

Durch die Zusammenführung der Hochdruckleitung 28 mit der Niederdruckleitung 37 an der Sprühpistole 16 ist es demzufolge möglich, mit ein und derselben Sprühpistole sowohl einen Niederdruckstrahl grosser Menge mit geringem Druck als auch einen Hochdruckstrahl mit relativ geringer Menge abzugeben.

Zusätzlich kann in einer Weiterbildung des vorliegenden Erfindungsgegenstands der Niederdruckteil auch mit einem Pressluftteil kombiniert werden. Hierzu ist in der Leitung 37 des Niederdruckteils ein T-Stück 39 angeordnet, an dem eine Leitung ansetzt, die über ein Rückschlagventil 42 am Ausgang eines Injektors 41 ansetzt. An der Eingangsseite des Injektors 41 wird über den Anschluss 40 Pressluft zugeführt. Über die Saugleitung 43 und gegebenenfalls über ein in der Saugleitung 43 angeordnetes Rückschlag- sowie Dosierventil wird in Pfeilrichtung 44 ein Chemikalienstrom aus der Saugleitung 43 abgesaugt. Die Magnetventile 32 können entsprechend angesteuert werden, so dass die gewünschte Chemikalie ausgewählt wird.

Es erfolgt somit auch eine Einspeisung eines Pressluftstrahls, dem gegebenenfalls Chemikalien beigemischt sind, in die Sprühpistole 16, wobei der Vorteil erzielt wird, dass die Leitungen stromabwärts des T-Stücks 39 mittels Pressluft saubergeblasen werden und mittels der Sprühpistole und der Düse 18 Wasserrückstände auf dem zu reinigenden Gegenstand mittels Pressluft entfernt werden können.

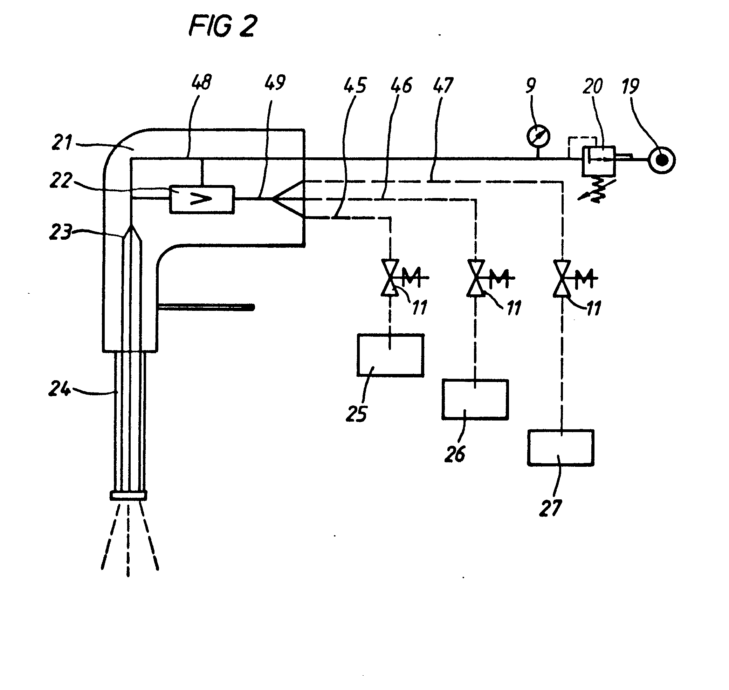

Das Ausführungsbeispiel gemäss Fig. 2, welches eine pressluftbetriebene Sprühpistole zeigt, kann die Sprühpistole 16 in Fig. 1 ersetzen. Das Ausführungsbeispiel gemäss Fig. 2 kann also eine zusätzliche Leitung 38 aufweisen, so dass sowohl ein Hochdruckals auch ein Niederdruck-Wasserstrahl über die Pistole 21 versprüht werden kann. Zusätzlich kann auch ein mit Chemikalien angereicherter Pressluftstrom versprüht werden, wie es jetzt anhand der Fig. 2 näher erläutert wird.

Die in Fig. 2 gezeigte Sprühpistole 21 ist also zum Versprüchen eines mit Chemikalien angereicherten Wasserstrahls als auch eines mit Chemikalien angereicherten Pressluftstrahls geeignet.

Im Ausführungsbeispiel nach Fig. 2 wird über den Anschluss 19 Pressluft eingespeist, die über einen Druckminderer 20 und ein Manometer 9 läuft. Der Injektor 22 zur Zumischung der Chemikalien dem Luft- oder Wasserstrom ist im Handgriff der Pistole 21 selbst eingebaut. Kurz stromaufwärts des Injektors sind verschiedene Ansaugleitungen 45, 46, 47 angeordnet, über die die Chemikalien aus Zusatzmittelbehältern 25, 26, 27 nach Einschaltung entsprechender Magnetventile 11 zugeführt werden.

Nach Umschaltung oder Einschaltung des entsprechenden Magnetventils 11 wird dann mittels des Injektors 22 unmittelbar die Chemikalie angesaugt, wodurch ein umständliches Leersaugen und Spülen der Ansaugleitungen, wie sie bei Anordnung des Standes der Technik bekannt ist, entfällt. Diese Anordnung findet insbesondere Anwendung beim Versprühen teurer Chemikalien, mit deren Verwendung sparsam umgegangen werden muss.

Über die Pressluftleitung 48 wird eine Luftmantelabschirmung im Luftverteiler 23 erreicht, d.h. der im Luftverteiler 23 abgebende Pressluftstrahl wird von dem über die Leitung 48 eingespeisten Pressluftstrahl mantelförmig umgeben, um eine zu grosse Aufspreizung des aus dem Sprührohr 24 austretenden Pressluftstrahls zu vermeiden. Die Leitung 49, in der die Ansaugleitungen 45, 46, 47 einmünden, ist besonders kurz ausgeführt, so dass kurze Chemalienwege die Folge sind.

In analoger Weise können die Magnetventile 11 über einen Wahlschalter im Handgriff der Sprühpistole 21 angesteuert werden oder auch über einen Wahlschalter, der im Gerät eingebaut ist.

## Patentansprüche

1. Vorrichtung zur Reinigung von Gegenständen mittels einer Sprühpistole (16), mit der ein gegebenenfalls erwärmter Wasser-Hochdruckstrahl auf den zu reinigenden Gegenstand gesprüht wird und dem Hochdruckstrahl reinigende und pflegende Chemikalien beimischbar sind, wobei der aus einem Wasserzulauf (1) entnommene Niederdruck-Wasserstrahl in einen geheizten Boiler (3) eingeleitet wird und die Saugleitung (34) einer Hochdruckpumpe (5) am Auslauf des Boilers angeschlossen ist, wobei die Hochdruckleitung (28) der Hochdruckpistole (5) über eine Anschlussleitung (38) mit der Sprühpistole (16) verbunden ist, dadurch gekennzeichnet, dass vom Wasserzulauf (1) abzweigend eine Niederdruckleitung (29) vorgesehen ist, die stromabwärts eines in der Hochdruckleitung (28) angeordneten Rückschlagventils (13b) in die Anschlussleitung (38) der Sprühpistole (16) mündet.

2. Vorrichtung nach Anspruch 1, dadurch gekennzeichnet, dass dem Niederdruckstrahl wahlweise verschiedene Chemikalien beimischbar sind.

3. Vorrichtung nach Anspruch 1, dadurch gekennzeichnet, dass stromabwärts des in der Hochdruckleitung (28) angeordneten Rückschlagventils (13b) ein Pressluftstrahl in die Anschlussleitung (38) an der Sprühpistole (16) einleitbar ist.

4. Vorrichtung nach Anspruch 1, dadurch gekennzeichnet, dass auch dem Hochdruckstrahl reinigende und pflegende Chemikalien beimischbar sind.

5. Vorrichtung nach Anspruch 3, dadurch gekennzeichnet, dass dem Pressluftstrahl reinigende und pflegende Chemikalien beimischbar sind.

6. Vorrichtung nach Anspruch 1 oder 3, dadurch gekennzeichnet, dass die Beimischung von Chemikalien in den Niederdruck- oder den Pressluftteil über Injektoren (12, 41) erfolgt, an deren Saugseite (Leitung 35 oder 43) ein oder mehrere Chemikalienleitungen über Magnetventile (32) angeschlossen sind.

7. Vorrichtung nach einem der Ansprüche 1 bis 6, dadurch gekennzeichnet, dass zum Zumischen von Chemikalien zu einem Pressluft- oder Wasserstrahl der die Chemikalien ansaugende Injektor (22) in der Sprühpistole (21) angeordnet ist und die verschiedenen Ansaugleitungen (45, 46, 47) zur Zuführung der Chemikalien in eine in der Sprühpistole (21) angeordnete, gemeinsame Leitung (49) münden.

8. Vorrichtung nach Anspruch 6 oder 7, dadurch gekennzeichnet, dass die in den Ansaugleitungen (33, 45, 46, 47) der Chemikalien-Zusatzmittelbehälter (25, 26, 27, 31) angeordneten Magnetventile (11, 32) über am Handgriff der Sprühpistole (16, 21) angeordnete Wahlschalter drahtgebunden oder drahtlos steuerbar sind.

## Claims

1. A device for cleaning objects by means of a spray gun (16), by which a possibly heated high-pressure water jet is sprayed on to the object to be cleaned, purifying and chemical agents being admixed to the high-pressure jet, whereby the low-pressure water jet derived from a water feed (1) is passed into a heated boiler (3) and the suction pipe (34) of a high-pressure pump (5) is connected to the outlet of the boiler, the high-pressure pipe (28) of the high-pressure gun (5) being connected to the spray gun (16) through a joint pipe (38), characterized in that a low-pressure pipe (29) including a nonreturn valve (13) and derived from the water feed (1) is provided, which downstream of a nonreturn valve (13b) arranged in the high-pressure pipe (28) ends in the connection pipe (38) of the spray gun (16).

2. A device according to the claim 1, characterized in that various chemical agents can selectively be admixed to the low-pressure jet.

3. A device according to the claim 1, characterized in that downstream of the nonreturn valve (13b) arranged in the high-pressure pipe (28) a compressed-air jet can be discharged into the connection pipe (38) at the spray gun (16).

4. A device according to the claim 1, characterized in that also the high-pressure jet purifying and maintaining chemical agents can be admixed.

5. A device according to the claim 3, characterized in that purifying and maintaining chemical agents can be admixed to the compressed-air jet.

6. A device according to the claim 1 or 3, characterized in that the admixture of chamical agents to the low-pressure or compressed-air part takes place through injectors (12, 41), to the suction side (pipe 35 or 43) of which one or several pipes for chemical agents are connected through solenoid valves (32).

7. A device according to one of the claims 1 to 6, characterized in that for the purpose of admixing chemical agents to a compressed-air or water jet the injector (22) taking in the chemical agents is arranged in the spray gun (21), and that the different suction pipes (45, 46, 47) for feeding the chemical agents end in a common pipe (49) arranged in the spray gun (21).

8. A device according to the claims 6 or 7, characterized in that the solenoid valves (11, 32) arranged in the suction pipes (33, 45, 46, 47) of the containers for chemical additions (25, 26, 27, 31) can be controlled through wires or wireless through monitoring switches arranged at the handle of the spray gun (16, 21).

**Revendications**

1. Appareil pour le nettoyage d'objets à l'aide d'un pistolet pulvérisateur (16), au moyen duquel un jet d'eau à haute pression et possiblement échauffé est lancé sur l'objet à être nettoyé, auquel des substances chimiches purifiantes et entretenantes peuvent être ajoutées, pendant que le jet d'eau à basse pression pris d'un afflux d'eau est introduit dans un chauffe-eau (3) et que la conduite d'aspiration (34) d'une pompe à haute pression (5) est reliée à l'écouloir du chauffe-eau, la conduite à haute pression (28) du pistolet à haute pression (5) étant reliée au pistolet pulvérisateur (5) par l'intermédiaire d'une conduite de raccordement (38), caractérisé en ce qu'une conduite à basse pression (29) branchée de l'afflux d'eau est prévue, qui en aval d'une soupape de retenue (13b) disposée dans la conduite à haute pression (28) débouche dans la conduite de raccordement du pistolet pulvérisateur (16).

2. Appareil conformément à la revendication 1, caractérisé en ce qu'au jet à basse pression peuvent être ajoutées à volonté différentes substances chimiques.

3. Appareil conformément à la revendication 1, caractérisé en ce qu'en aval de la soupape de retenue (13b) disposée dans la conduite à haute pression (28) un jet d'air comprimé peut être introduit dans la conduite de raccordement (38) reliée au pistolet pulvérisateur (16).

4. Appareil conformément à la revendication 1, caractérisé en ce qu'au jet à haute pression des substances chimiques pour le nettoyage et l'entretien peuvent être ajoutées.

5. Appareil conformément à la revendication 3, caractérisé en ce qu'au jet d'air comprimé des substances chimiques pour nettoyage l'entretien peuvent être ajoutées.

6. Appareil conformément à la revendication 1 ou 3, caractérisé en ce que l'addition des substances chimiques a lieu dans la partie à basse pression ou à air comprimé par l'intermédiaire d'injecteurs (12, 41), à la partie d'aspiration (conduite 35 ou 43) desquels un ou plusieurs conduites de substances chimiques sont reliées par l'intermédiaire de soupapes à aimant (32).

7. Appareil conformément aux revendications 1 à 6, caractérisé en ce qu'au but de l'addition de substances chimiques à un jet d'air comprimé ou d'eau, l'injecteur (22) aspirant les substances chimiques est disposé dans le pistolet pulvérisateur (21) et que les différentes conduites d'aspiration (45, 46, 47) pour l'amenée des substances chimiques débouchant dans une conduite commune (49) disposée dans le pistolet pulvérisateur (21).

8. Appareil conformément à la revendication 6 ou 7, caractérisé en ce que les soupapes (11, 32) a aimant disposées dans les conduites d'aspiration (33, 45, 46, 47) des récipients des substances chimiques à être ajoutées (25, 26, 27, 31) peuvent être actionnes, par fil ou sans-fil au moyen de commutateurs sélecteurs disposés à la poignée du pistolet pulvérisateur.

**FIG 1**

## FIG 2